# EUROPEAN PATENT APPLICATION

(11) **EP 2 219 123 A1**
(43) Date of publication of application: **18.08.2010**
(21) Application number: 10250237.4
(22) Date of filing: 12.02.2010
(51) Int. Cl.: G06F 17/30, G06Q 30/00

(54) **A data system architecture to analyze distributed data sets**

(30) Priority: 12.02.2009 US 370012
(71) Applicant: ACCENTURE Global Services GmbH, 8200 Schaffhausen (CH)
(72) Inventor: Lamm, Kevan Warren, Gainesville, Florida 32607 (US)
(74) Representative: Fennell, Gareth Charles

(57) **Abstract**

Methods, computer-readable media, and apparatuses support data transfer through electronic and secured channels, in which manual intervention for collecting, collating, or posting reporting results is reduced. Consistent data sets over different data sources may be collected for different accounts. Data entries in a data set may be further audited in order to verify data integrity. A data source may be backed up through a local (distributed) network of administrator machines so that the data may be analyzed at another data site without possibly corrupting the original data. Reports may also be generated using standard business rules across accounts. Moreover, custom reports are supported allowing multiple (as determined by entry criteria) degrees of freedom.

## Description

### FIELD

This invention relates generally to a distributed data system. More particularly, the invention provides methods, apparatuses, and computer readable media for mirroring data from one data site to another data site.

### BACKGROUND

A distributed system typically consists of a number of data processing machines interconnected by a data communication network. For example, data at one data site may be accessed transparently by data processing programs executing at another data site in a distributed data system. In a distributed database system, data may be split up and stored at several data sites with the objective of locating it near to the processes, which access it in order to reduce the data traffic on the communication network. However, it is usually the case that some of the data sites have to access data located at another data site. This remote access increases the cost and delay involved in data processing operations, so that the processing performance of these data sites may be significantly worse than that of an equivalent stand-alone system with its own data. An additional problem is that failure of the communications links or of data processing machines at other network data sites may prevent remote data from being accessed at certain times. The availability of the data may be consequently worse than if each data site were a stand-alone system. Although the purpose of a distributed system is to allow users to share data resources, these negative effects may tend to deter users from relying on remote data access. This in turn detracts from the benefits of a distributed system compared with a simple centralized system.

A distributed data system may be categorized into different types of data systems, including a distributed file system or a shared file system. A distributed file system typically allows access to files located on another remote host as though working on the actual host computer. This makes it possible for multiple users on multiple machines to share files and storage resources. The client nodes do not have direct access to the underlying block storage but interact over the network using a protocol. This makes it possible to restrict access to the file system depending on access lists or capabilities on both the servers and the clients, depending on how the protocol is designed. In contrast, in a shared disk file systems all nodes have equal access to the block storage where the file system is located. On these data systems the access control typically resides on the client. Distributed file systems may include facilities for transparent replication and fault tolerance. Thus, when a limited number of nodes in a file system go offline, the system continues to work without any data loss.

In addition, a data file may be created at one data site in a distributed data system. A user may wish access and analyze the data at another data site of the distributed data system without disrupting the original data file.

### BRIEF SUMMARY

The present invention provides methods, apparatuses, and computer-readable media for a distributed data system that supports data transfer through electronic and secured channels, in which manual intervention for collecting, collating, or posting reporting results is reduced. Consistent data sets over different data sources may be collected for different accounts.

With another aspect of the invention, data entries in a data set may be further audited in order to verify data integrity. Moreover, a data source may be backed up through a local (distributed) network of administrator machines so that the data may be analyzed at another data site without possibly corrupting the original data.

With another aspect of the invention, reports may be generated using standard business rules across accounts. Moreover, custom reports are supported allowing multiple (as determined by entry criteria) degrees of freedom.

With another aspect of the invention, a database architecture supports a process of establishing a database counterpart to each data list and through the utilization of software script and SQL (macros and queries) collating multiple data sets from multiple data sites and analyzing the data using defined business rules.

With another aspect of the invention a first data set and a second data set from a first data site and a second data site, respectively, are mirrored at a local data site. The mirrored data corresponds to an aggregated data set and is analyzed based on business rules. The results may be published at a selected data site in the distributed data system.

With another aspect of the invention, an aggregated data set is analyzed against an independent data set.

With another aspect of the invention, custom reporting criteria is received from a data site and an aggregated data set is analyzed based on the custom reporting criteria. The results of the custom report may be further reported to the data site.

### BRIEF DESCRIPTION OF THE DRAWINGS

The present invention is illustrated by way of example and not limited in the accompanying figures in which like reference numerals indicate similar elements and in which:
Figure 1 shows a computer system used in an advanced payment integrity system in accordance with an embodiment of the invention.
Figure 2 shows a block diagram for mirroring data sets from database sources to a mirrored database in accordance with an embodiment of the invention.
Figure 3 shows a flow diagram for mirroring data from SharePoint® sites and for analyzing the mirror data in accordance with an embodiment of the invention.
Figure 4 shows a flow diagram mirroring data at a SharePoint site in accordance with an embodiment of the invention.
Figure 5 shows a flow diagram for custom reporting mirrored data in accordance with an embodiment of the invention.
Figures 6A and 6B show a database architecture for mirroring and analyzing distributed data sets in accordance with an embodiment of the invention.
Figure 7 shows a screenshot for entering data into a SharePoint site in accordance with an embodiment of the invention.
Figure 8 shows a datasheet with data entries that are reviewable by a reference number in accordance with an embodiment of the invention.
Figure 9 shows a data entry that may be edited in accordance with an embodiment of the invention.
Figure 10 shows a screenshot with a listing of tables that link a mirrored database with SharePoint sites in accordance with an embodiment of the invention.
Figure 11 shows a screenshot in which each SharePoint data set is imported locally through queries (SQL) and then mirrored locally through an append function in accordance with an embodiment of the invention.
Figure 12 shows a screenshot in which Visual Basic® scripting automates the aggregation process in accordance with an embodiment of the invention.
Figure 13 shows a screenshot in which Microsoft Access® queries (SQL) that analyze the aggregated data in which a logical ordering of queries filters the data according to business rules and reporting requirements according to an embodiment of the invention.
Figure 14 shows a screenshot in which exemplary SQL code is used to execute preliminary local database mirroring of online data set according to an embodiment of the invention.
Figure 15 shows a screenshot in which collated data sets are analyzed against another independent data set (Total Base Demand) in accordance with an embodiment of the invention.
Figure 16 shows a screenshot in which SQL queries further analyze aggregated data against predicted demand in accordance with an embodiment of the invention.
Figure 17 shows a screenshot in which results of business rule analysis are appended to linked reporting tables in accordance with an embodiment of the invention.
Figure 18 shows a screenshot in which aggregated results from all linked SharePoint sites/clients are published and mirrored to a specified SharePoint site in accordance with an embodiment of the invention.
Figure 19 shows a screenshot in which results of query analysis (driven by business rules) are published and available within data aggregation SharePoint site in accordance with an embodiment of the invention.
Figure 20 shows a screenshot for requesting a customer report in accordance with an embodiment of the invention.
Figure 21 shows a screenshot in which an administrator is guided through the reporting process in accordance with an embodiment of the invention.
Figure 22 shows a screenshot in which data views of a custom report is presented in accordance with an embodiment of the invention.

### DETAILED DESCRIPTION

With aspects of the invention, data is transferred through electronic and secured channels, in which manual intervention for collecting, collating, or posting reporting results is reduced. Consistent data sets over different data sources may be collected for different accounts.

In accordance with some embodiments, a data set (dataset) is a collection of data. A data set may assume different forms, including a computer data structure or even one variable. As an example, a data set may be presented in tabular form. Each column represents a particular variable. Each row corresponds to a given member of the data set in question. The tabular form lists values for each of the variables, such as height and weight of an object or values of random numbers. Each value is known as a datum. The data set may comprise data for one or more members, corresponding to the number of rows.

Data entries in a data set may be further audited in order to verify data integrity. Moreover, a data source (data site) may be backed up through a local (distributed) network of administrator machines so that the data may be analyzed at another data site without possibly corrupting the original data.

Reports may be generated using standard business rules across accounts. Moreover, custom reports are supported allowing multiple (as determined by entry criteria) degrees of freedom.

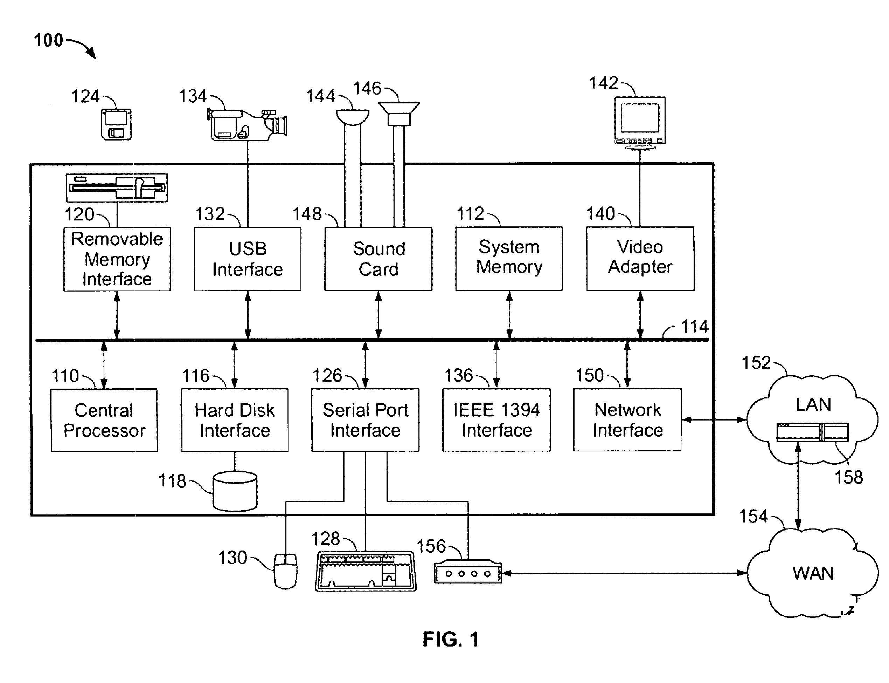

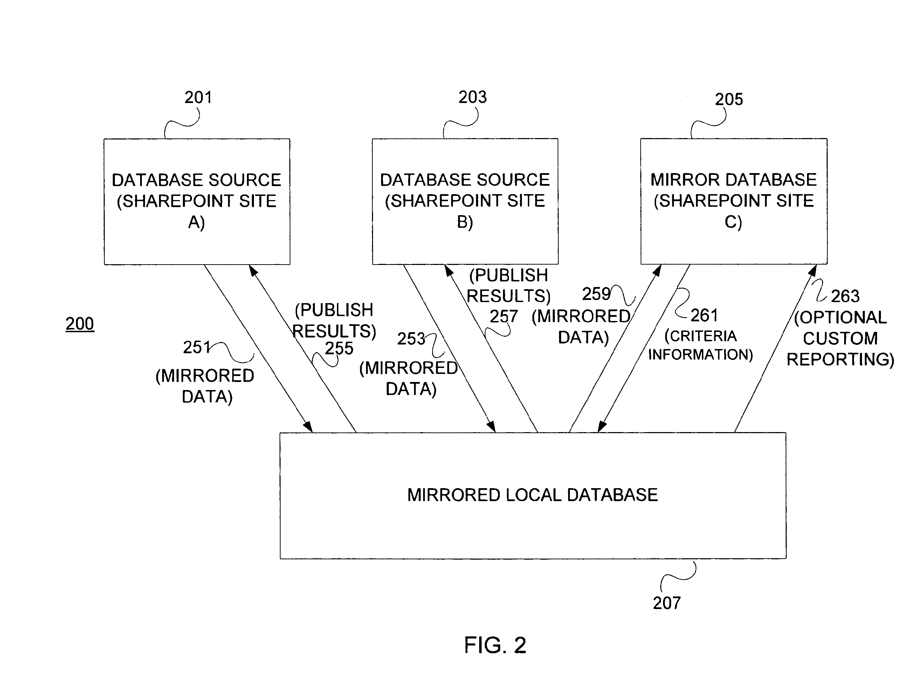

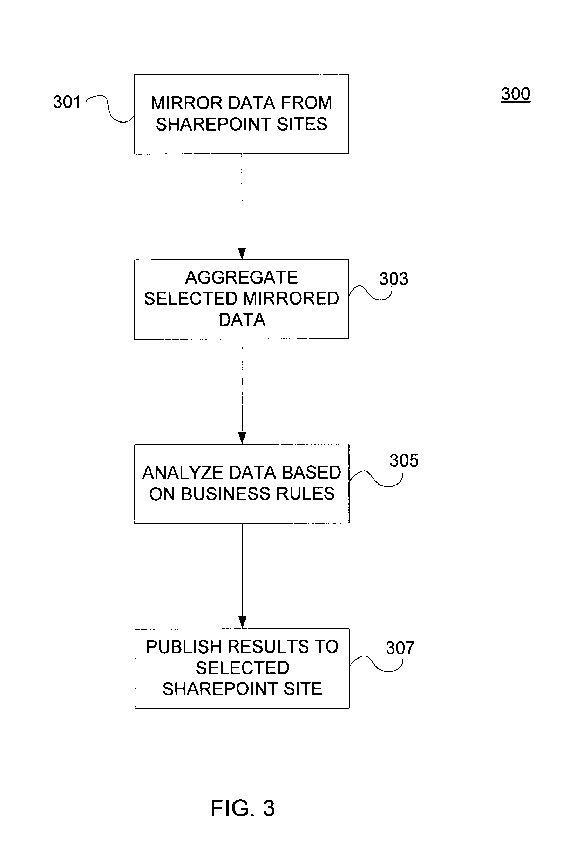

Elements of the present invention may be implemented with computer systems, such as the system 100 shown in Figure 1. System 100 may support the functionality of mirrored local database 207 (as shown in Figure 2) in order to execute processes 300, 400, 500, and 600 corresponding to Figures 3, 4, 5, and 6, respectively, in accordance with aspects for the invention as disclosed herein.

Computer 100 includes a central processor 110, a system memory 112 and a system bus 114 that couples various system components including the system memory 112 to the central processor unit 110. System bus 114 may be any of several types of bus structures including a memory bus or memory controller, a peripheral bus, and a local bus using any of a variety of bus architectures. The structure of system memory 112 is well known to those skilled in the art and may include a basic input/output system (BIOS) stored in a read only memory (ROM) and one or more program modules such as operating systems, application programs and program data stored in random access memory (RAM).

Computer 100 may also include a variety of interface units and drives for reading and writing data. In particular, computer 100 includes a hard disk interface 116 and a removable memory interface 120 respectively coupling a hard disk drive 118 and a removable memory drive 122 to system bus 114. Examples of removable memory drives include magnetic disk drives and optical disk drives. The drives and their associated computer-readable media, such as a floppy disk 124 provide nonvolatile storage of computer readable instructions, data structures, program modules and other data for computer 100. A single hard disk drive 118 and a single removable memory drive 122 are shown for illustration purposes only and with the understanding that computer 100 may include several of such drives. Furthermore, computer 100 may include drives for interfacing with other types of computer readable media.

A user can interact with computer 100 with a variety of input devices. Figure 1 shows a serial port interface 126 coupling a keyboard 128 and a pointing device 130 to system bus 114. Pointing device 128 may be implemented with a mouse, track ball, pen device, or similar device. Of course one or more other input devices (not shown) such as a joystick, game pad, satellite dish, scanner, touch sensitive screen or the like may be connected to computer 100.

Computer 100 may include additional interfaces for connecting devices to system bus 114.
Figure 1 shows a universal serial bus (USB) interface 132 coupling a video or digital camera 134 to system bus 114. An IEEE 1394 interface 136 may be used to couple additional devices to computer 100. Furthermore, interface 136 may configured to operate with particular manufacture interfaces such as FireWire developed by Apple Computer and i.Link developed by Sony. Input devices may also be coupled to system bus 114 through a parallel port, a game port, a PCI board or any other interface used to couple and input device to a computer.

Computer 100 also includes a video adapter 140 coupling a display device 142 to system bus 114. Display device 142 may include a cathode ray tube (CRT), liquid crystal display (LCD), field emission display (FED), plasma display or any other device that produces an image that is viewable by the user. Additional output devices, such as a printing device (not shown), may be connected to computer 100.

Sound can be recorded and reproduced with a microphone 144 and a speaker 166. A sound card 148 may be used to couple microphone 144 and speaker 146 to system bus 114. One skilled in the art will appreciate that the device connections shown in Figure 1 are for illustration purposes only and that several of the peripheral devices could be coupled to system bus 114 via alternative interfaces. For example, video camera 134 could be connected to IEEE 1394 interface 136 and pointing device 130 could be connected to USB interface 132.

Computer 100 can operate in a networked environment using logical connections to one or more remote computers or other devices, such as a server, a router, a network personal computer, a peer device or other common network node, a wireless telephone or wireless personal digital assistant. Computer 100 includes a network interface 150 that couples system bus 114 to a local area network (LAN) 152. Networking environments are commonplace in offices, enterprise-wide computer networks and home computer systems.

A wide area network (WAN) 154, such as the Internet, can also be accessed by computer 100. Figure 1 shows a modem unit 156 connected to serial port interface 126 and to WAN 154. Modem unit 156 may be located within or external to computer 100 and may be any type of conventional modem such as a cable modem or a satellite modem. LAN 152 may also be used to connect to WAN 154. Figure 1 shows a router 158 that may connect LAN 152 to WAN 154 in a conventional manner.

It will be appreciated that the network connections shown are exemplary and other ways of establishing a communications link between the computers can be used. The existence of any of various well-known protocols, such as TCP/IP, Frame Relay, Ethernet, FTP, HTTP and the like, is presumed, and computer 100 can be operated in a client-server configuration to permit a user to retrieve web pages from a web-based server. Furthermore, any of various conventional web browsers can be used to display and manipulate data on web pages.

The operation of computer 100 can be controlled by a variety of different program modules. Examples of program modules are routines, programs, objects, components, data structures, etc., that perform particular tasks or implement particular abstract data types. The present invention may also be practiced with other computer system configurations, including handheld devices, multiprocessor systems, microprocessor-based or programmable consumer electronics, network PCS, minicomputers, mainframe computers, personal digital assistants and the like. Furthermore, the invention may also be practiced in distributed computing environments where tasks are performed by remote processing devices that are linked through a communications network. In a distributed computing environment, program modules may be located in both local and remote memory storage devices.

Figure 2 shows system 200 for mirroring data sets from database sources 201 and 203 to mirrored database 207 in accordance with an embodiment of the invention. Different data sites 201 and 203 typically correspond to different clients (accounts). On-line environment of database sources 201 and 203 provide the ability to create lists where a distributed network of individuals (users) can input data using a common form interface. For example, database sources 201 and 203 may support Microsoft SharePoint® and mirrored local database 207 may support Microsoft Access.

Microsoft SharePoint is an example of a collaborative tool that enables groups to configure portals and hierarchies of websites without specifically requiring web-development. This allows groups of end-users, as participants, to have much greater control in finding, creating, collecting, organizing, and collaborating on relevant information, in a browser-based environment. Microsoft SharePoint also allows views of the different collections of information to be easily filtered, grouped, and/or sorted by each consumer according to their current desire. It has a robust permissions structure, allowing organizations to target user access and capabilities based on their organizational role, team membership, interest, security group, or any other membership criteria that can be defined.

A Microsoft SharePoint online environment provides the capability to create lists where a distributed network of individuals can input data using a common form interface. Each list acts as an independent data source and is restricted to use within one SharePoint site instance. Additionally, according to traditional systems, the available analysis of data sets is typically limited to count, average, maximum, minimum, sum, standard deviation, and variance. According to an aspect of the invention, a database architecture supports a process of establishing a database counterpart to each SharePoint list and through the utilization of Micro Visual Basic® (VB) Script and SQL (macros and queries) collating multiple data sets from multiple SharePoint sites and analyzing the data using defined business rules. SQL (Structured Query Language) is a database computer language designed for the retrieval and management of data in relational database management systems (RDBMS), database schema creation and modification, and database object access control management.

Microsoft Access® is a relational database management system provided by Microsoft that combines the relational Microsoft Jet Database Engine with a graphical user interface and software development tools. Microsoft Access can use data stored in Access/Jet, Microsoft SQL Server, Oracle, or any ODBC-compliant data container. Software developers and data architects can use it to develop application software and non-programmer "power users" can use it to build simple applications. It supports some object-oriented techniques.

Referring to Figure 2, each list acts as an independent data source and is restricted to use within one SharePoint site instance. Additionally, traditional systems limit analysis of data sets to count, average, maximum, minimum, sum, standard deviation, and variance.

According to an aspect of the invention, database architecture 200 supports a process of establishing a database counterpart to each SharePoint list, collating multiple data sets from multiple SharePoint sites 201 and 203 (corresponding to mirrored data 251 and 253), and analyzing the data using defined business rules through Visual Basic script and SQL (using macros and queries).

Results of analysis are published to data sites 201 and 203 corresponding to results 255 and 257. In addition, processed data from data site 201 and/or data site 203 may be mirrored (corresponding to mirrored data 259) on data site 205 through mirrored database 207.

System 200 may support standard and custom reports. When supporting a custom report, report criteria information 261 is provided so that mirror database 207 can publish the custom results 263 in accordance with criteria information 261. With some embodiments, custom report parameters may be set within the source database (*e*.*g*., database 201) and applied in the mirrored database (*e*.*g*., database 207). The results may then be reposted to the source database.

Each standard report typically includes numerous views of the data, where each view aligns to a particular query and calculation completed in the database 207. In addition to standard reports, a sub-site at data site 205 dedicated to custom reporting is also available. A SharePoint site, *e*.*g*., data site 205, is typically secured through access lists maintained by a central administrator.

The data set for the custom reports is ported from the data entry site in order to create a mirrored backup without the risk of source data corruption Data mirroring is typically accomplished through additional macros, automating the transfer process Users can request custom reports (*e*.*g*., from data site 205) based on criteria the user identify, where each data item in the request log can serve as a reporting criteria After submitting the custom report request the criteria are held in a list at the SharePoint site to monitor type and frequency of requests.

Within local database 207, the administrator is guided through the reporting process using intuitive buttons. After refreshing the mirrored data, the administrator is directed to select the appropriate custom report request. Correct custom report request is located (identified by time stamp and customized field), and the administrator clicks intuitive button to continue automated process.

Figure 3 shows flow diagram 300 for mirroring data from SharePoint sites on a local data site and for analyzing the mirror data in accordance with an embodiment of the invention. In step 301, data is collected from SharePoint sites 201 and 203 at local mirrored database 207 and selected data is aggregated in step 303. In step 305, the aggregated data is analyzed based on business rules, *e*.*g*., line item count/transaction count, internal/external change request, transaction type (add/edit /cancel), and % change calculated by dividing above count by total base demand. The results are published to a selected SharePoint site (*e*.*g*., data site 205) in step 307.

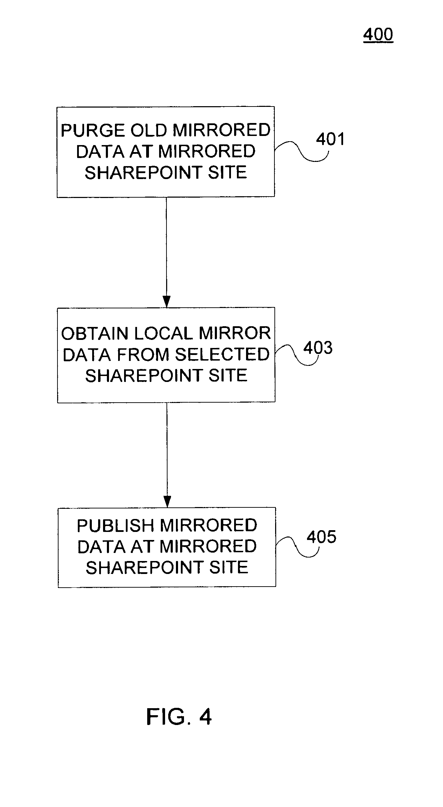

Figure 4 shows flow diagram 400 mirroring data at a SharePoint site in accordance with an embodiment of the invention. In step 401, old mirrored data for a SharePoint site (*e*.*g*., data site 201 or 203) is purged at local database 207. In step 403, local database 207 obtains mirrored data from a SharePoint site. The mirrored data may be published to another SharePoint site (*e*.*g*., data site 205) in step 405.

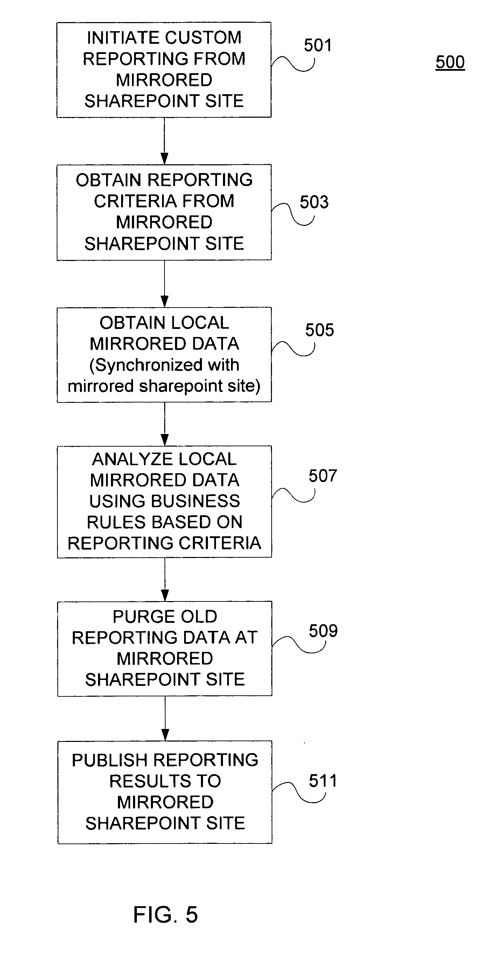

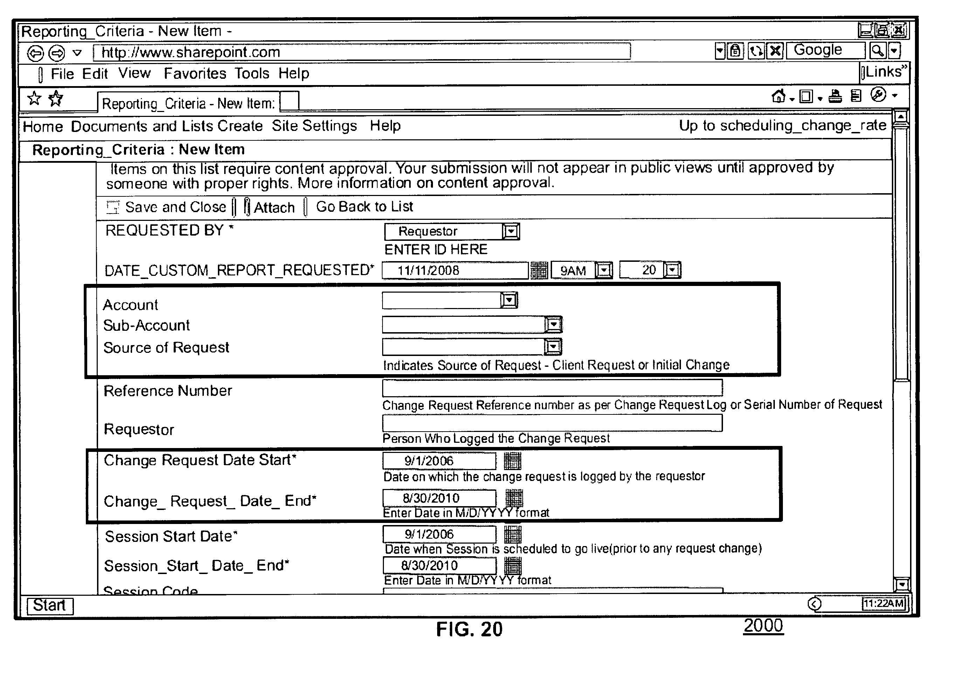

Figure 5 shows flow diagram 500 for custom reporting mirrored data in accordance with an embodiment of the invention. Figures 20-22 show corresponding screenshots for requesting receiving a custom report. In step 501, a custom report is initiated from a SharePoint site.

Local database 507 receives reporting criteria from the mirrored SharePoint site in step 503. Mirrored data at local database 507 is synchronized with the mirrored SharePoint site in step 505 to insure that a custom report reflects current mirrored data. The mirrored data is analyzed in step 507 according to business rules based on the reporting criteria obtained in step 503. Old reporting data is purged at the mirrored SharePoint site in step 509 so that new reporting results can be published at the mirrored SharePoint site in step 511.

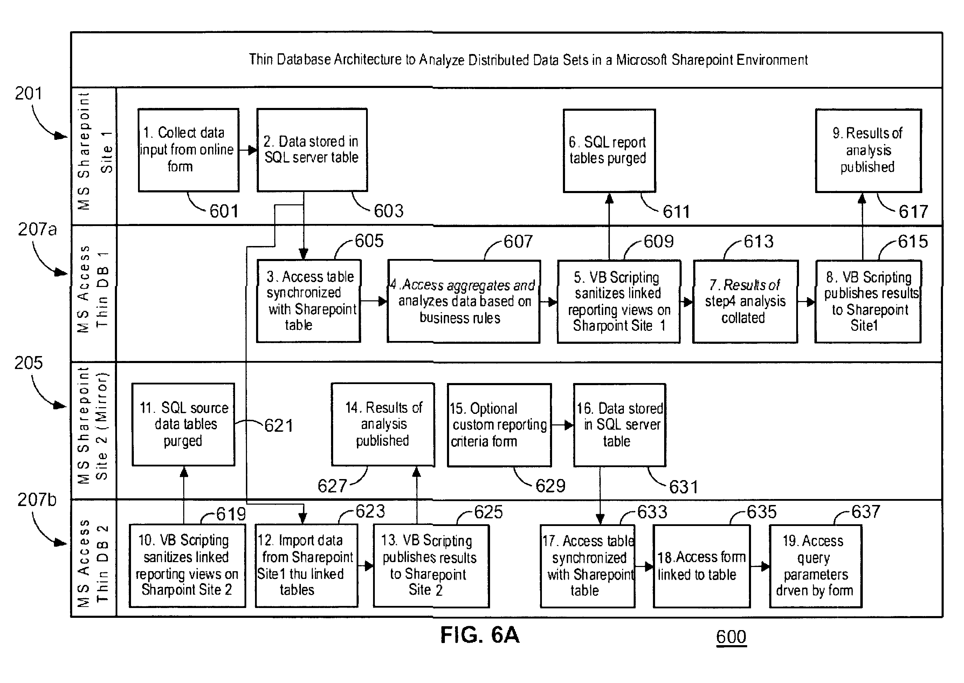

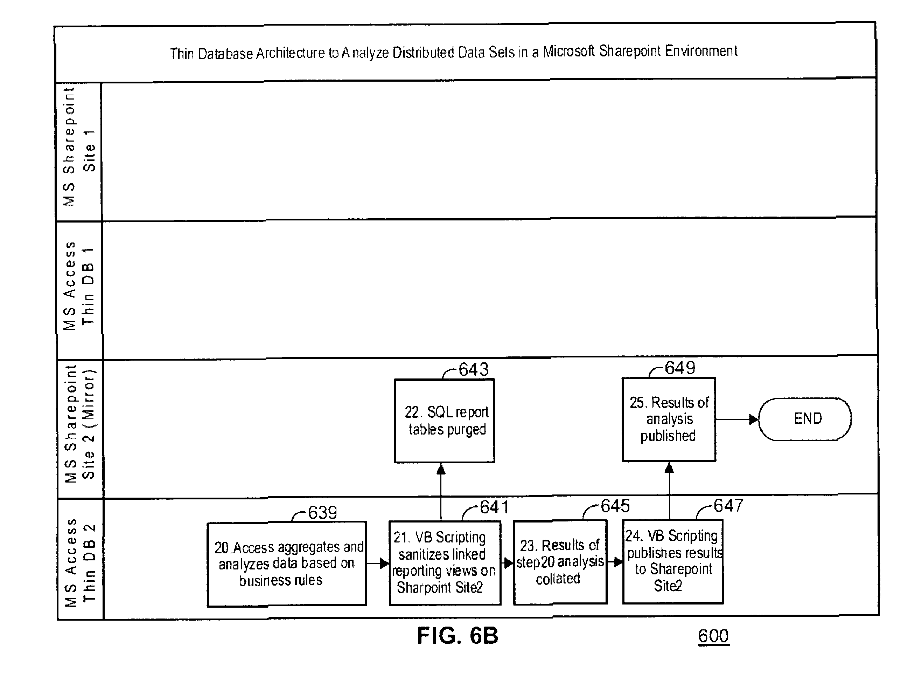

Figures 6A and 6B show database architecture 600 for mirroring and analyzing distributed data sets in accordance with an embodiment of the invention. With an embodiment, steps 601, 603, 611, and 617 are performed at SharePoint site 201. Steps 605, 607, 609, 613, 615, 619, 623, 625, 633, 635, 637, 639, 641, 645, and 647 are performed at local database 207 (corresponding to 207a and 207b, where each SharePoint site corresponds to separate databases at local database 207). Steps 621, 627, 629, 631, 643, and 649 are performed at SharePoint site 205.

Data is collected at data site 201 in steps 601 and 603 and mirrored at local database 207 in step 605. The mirrored data is analyzed in step 607, and the results are reported to data site 201 in steps 609, 613, and 615 (corresponding to steps 611 and 617 at data site 201).

Local database 207 also provides mirrored data and analysis results (*e*.*g*., standard reports) for SharePoint site 201 to SharePoint site 205 in steps 619, 623, and 625 (corresponding to steps 621 and 627 at data site 205). In addition, SharePoint 205 may further request a custom report for mirrored data from SharePoint site 201 in steps 629, 631, 643, and 649 (corresponding to steps 633, 635, 637, 639, 641, 645, and 647 (corresponding to local database 207).

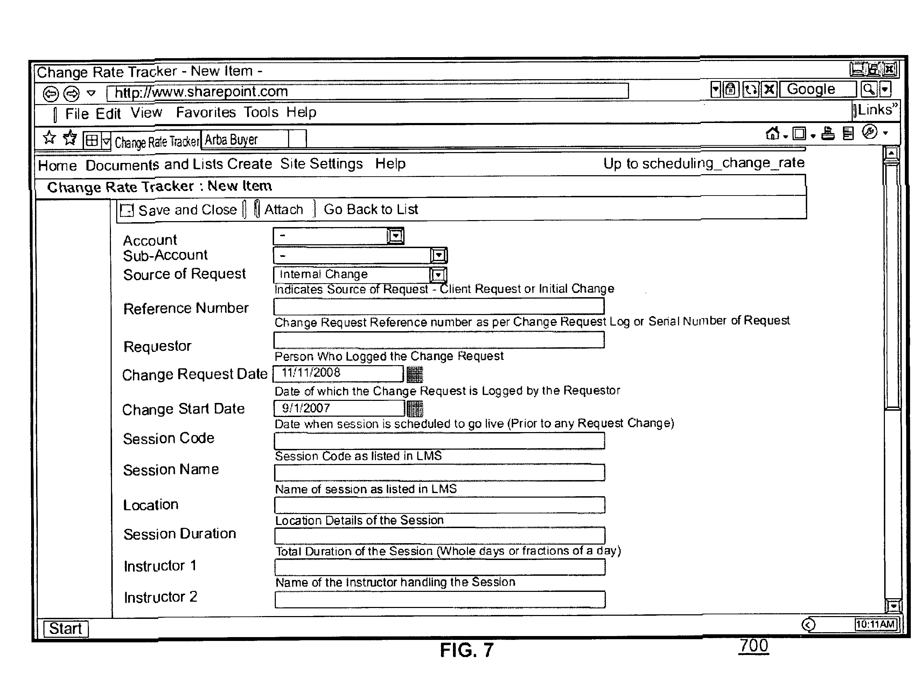

While an exemplary embodiment, as will be discussed with Figures 7-22, supports a distributed data system for tracking scheduled trainings sessions for different clients, other embodiments of the invention support other applications. For example, some embodiments may support data acquisition (*e*.*g*., weather data) and financial applications. Embodiments of the invention may support other applications including procurement to payment tracking, invoice receipt tracking, and vendor management.

Figure 7 shows screenshot 700 for entering data into a SharePoint site in accordance with an embodiment of the invention. With exemplary embodiment, a data entry corresponds to a scheduled training session that is entered at a SharePoint site. Typically, a SharePoint site (*e*.*g*., data site 201 is associated with account A and data site 203 is associated with account B) is allocated to a specific account. However, the data entry fields are typically consistent for all accounts.

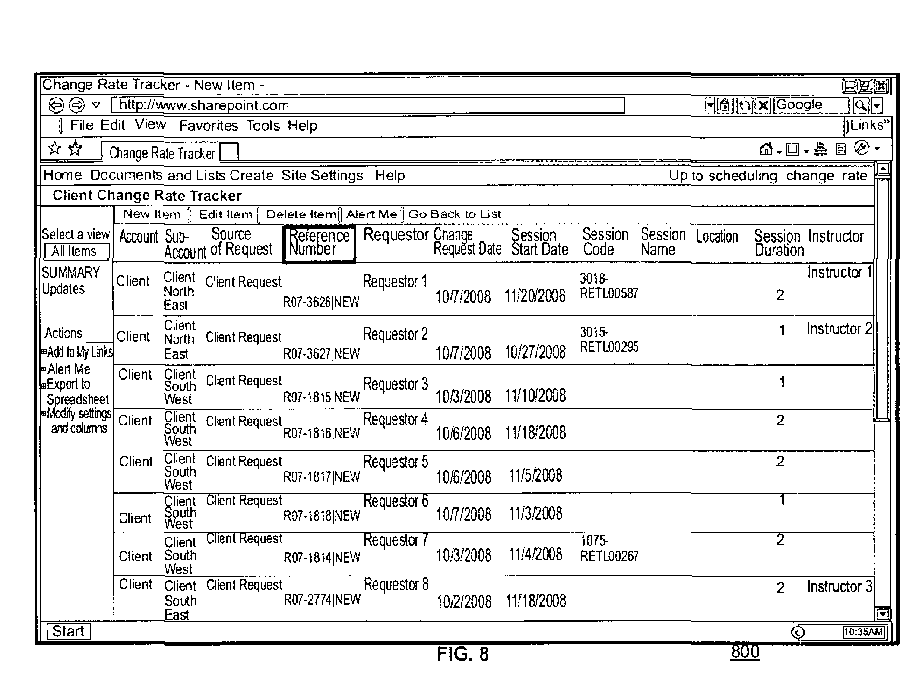

Figure 8 shows datasheet 800 with data entries that are reviewable by a reference number in accordance with an embodiment of the invention. The entries are reviewable in datasheet format, and the items are editable by clicking the linked "Reference Number."

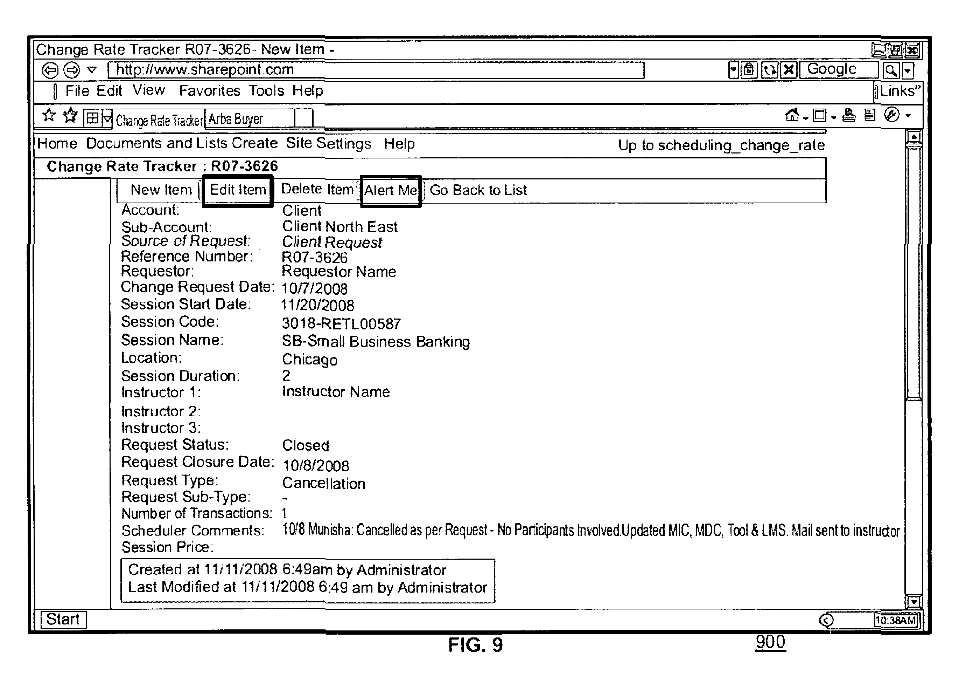

Figure 9 shows data entry 900 that may be edited in accordance with an embodiment of the invention. The user has the option to edit the item. A display of when the item was created or modified is also shown. An user may select the "Alert Me" option to have an e-mail generated when updates are made to the item

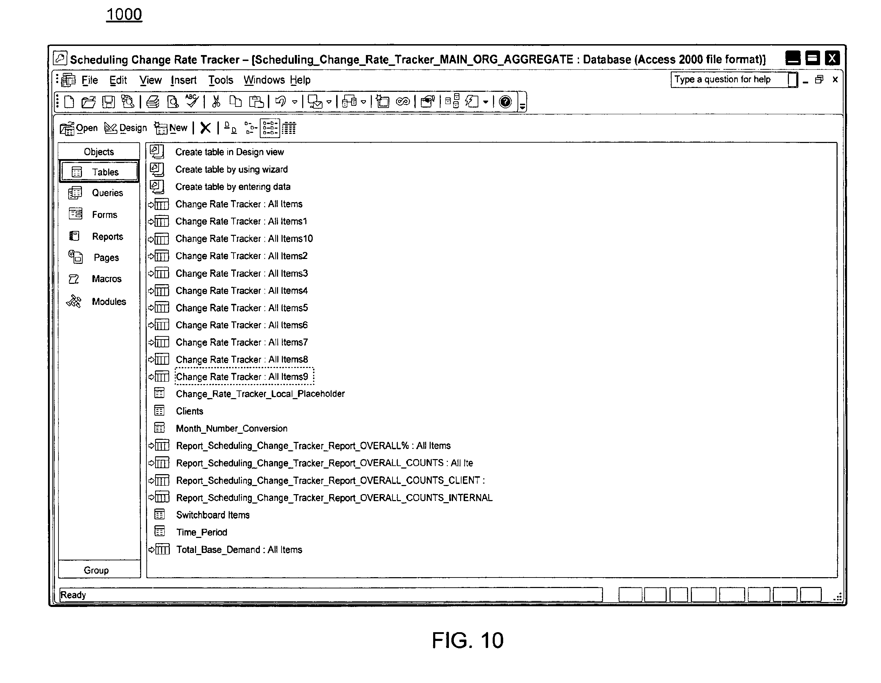

Figure 10 shows screenshot 1000 with a listing of tables that link a mirrored database with SharePoint sites in accordance with an embodiment of the invention. An aggregated database is formed, where each unique table represents an independent SharePoint site data set. The tables are linked through a common Access interface.

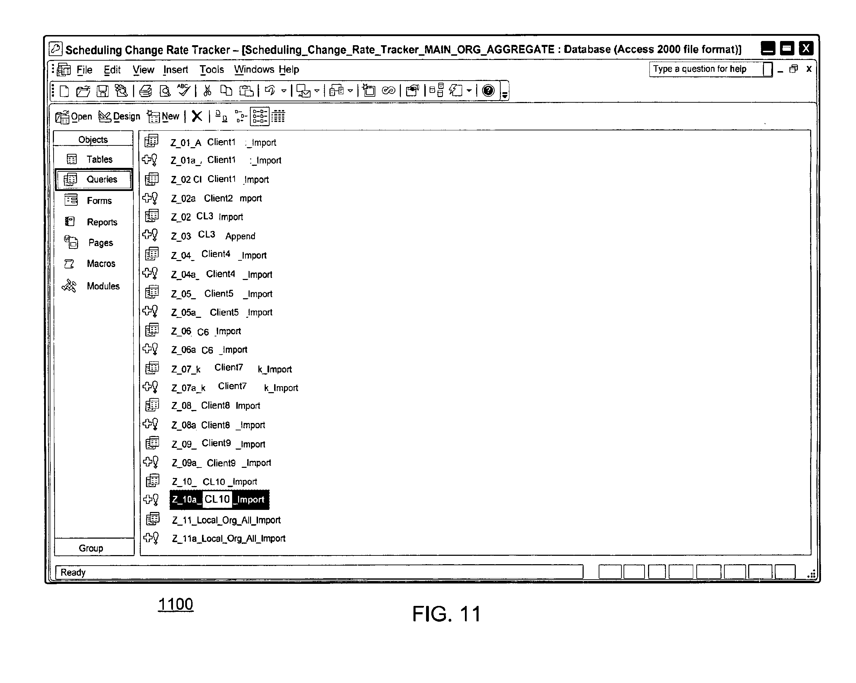

Figure 11 shows screenshot 1100 in which each SharePoint data set is imported locally through queries (SQL) and then mirrored locally through an append function in accordance with an embodiment of the invention. Each SharePoint data set is imported locally through queries and then mirrored locally through an append function. With an exemplary embodiment, there are 10 clients currently linked through this architecture. However, according to aspects of the invention, the process is only limited by the physical computing power of the local machine.

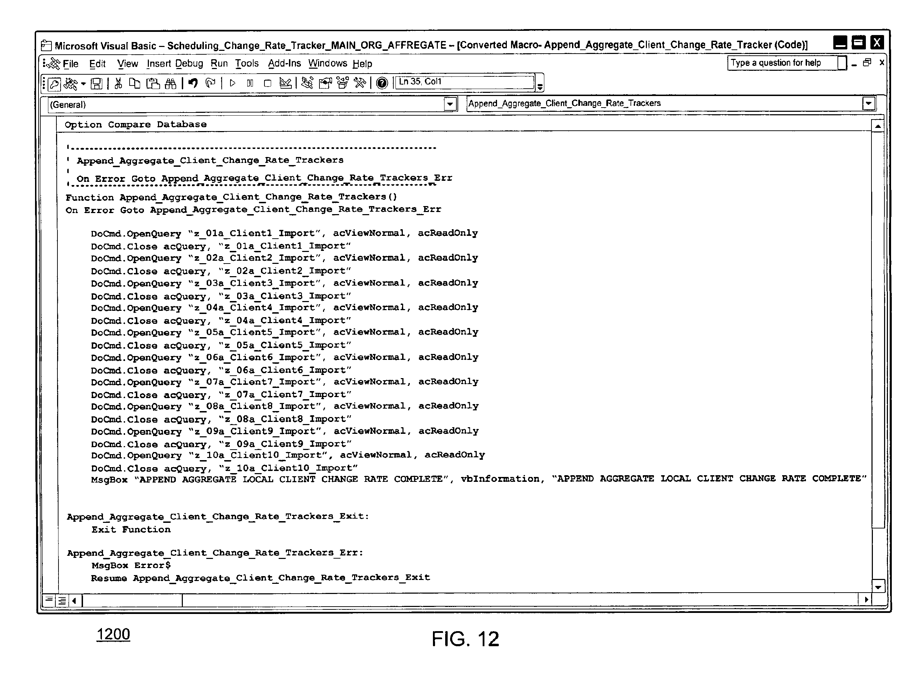

Figure 12 shows screenshot 1200 in which Visual Basic scripting automates the aggregation process in accordance with an embodiment of the invention.

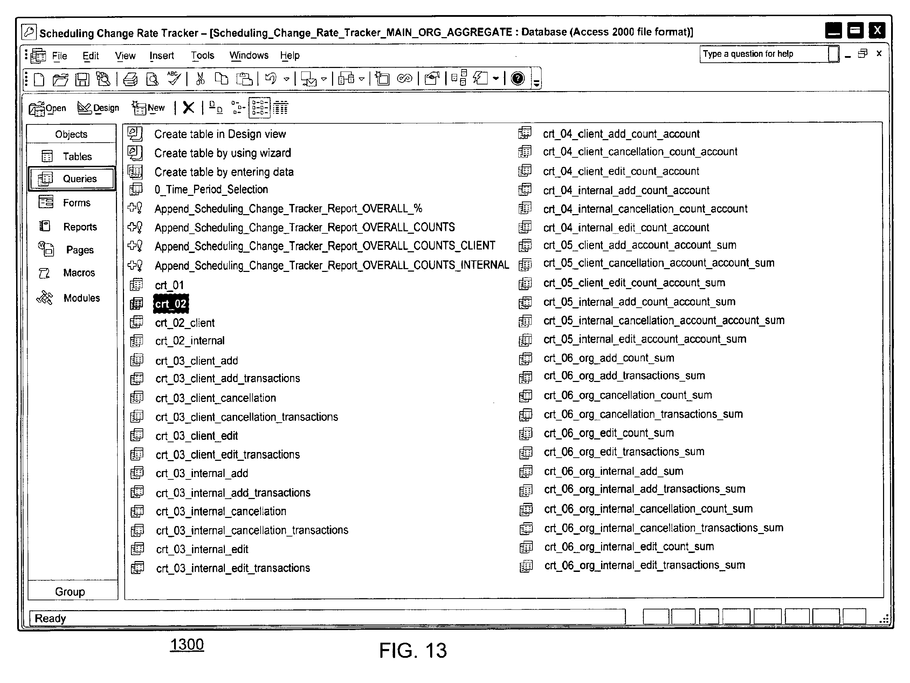

Figure 13 shows screenshot 1300 in which Microsoft Access queries (SQL) that analyze the aggregated data in which a logical ordering of queries filters the data according to business rules and reporting requirements according to an embodiment of the invention. Once all unique data sets have been imported, aggregated, and mirrored locally Microsoft Access queries (SQL) analyze the aggregated data and a logical ordering of queries filters the data according to business rules and reporting requirements.

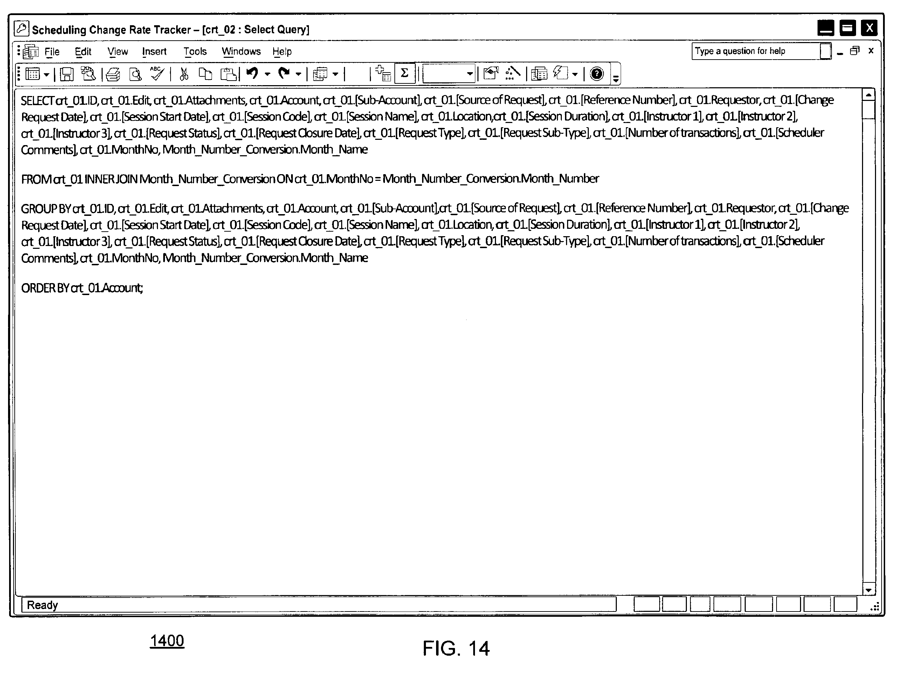

Figure 14 shows screenshot 1400 in which exemplary SQL code is used to execute preliminary local database mirroring of online data set according to an embodiment of the invention.

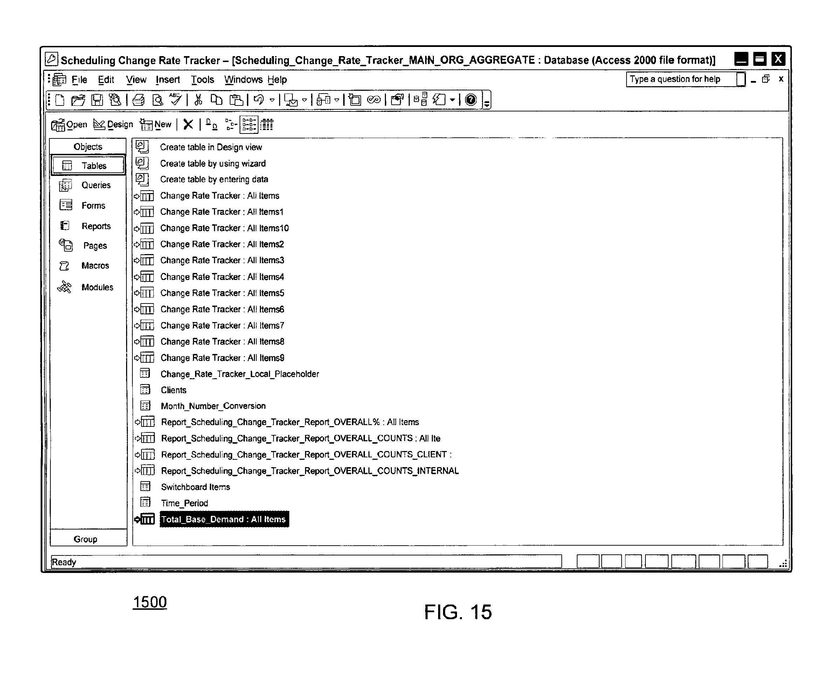

Figure 15 shows screenshot 1500 in which collated data sets are analyzed against another independent data set (*e*.*g*., total base demand) in accordance with an embodiment of the invention. With the exemplary embodiment, collated data sets are analyzed against the total base demand. This value becomes the denominator for subsequent change reporting calculations, which are used to form a unique SharePoint site data set.

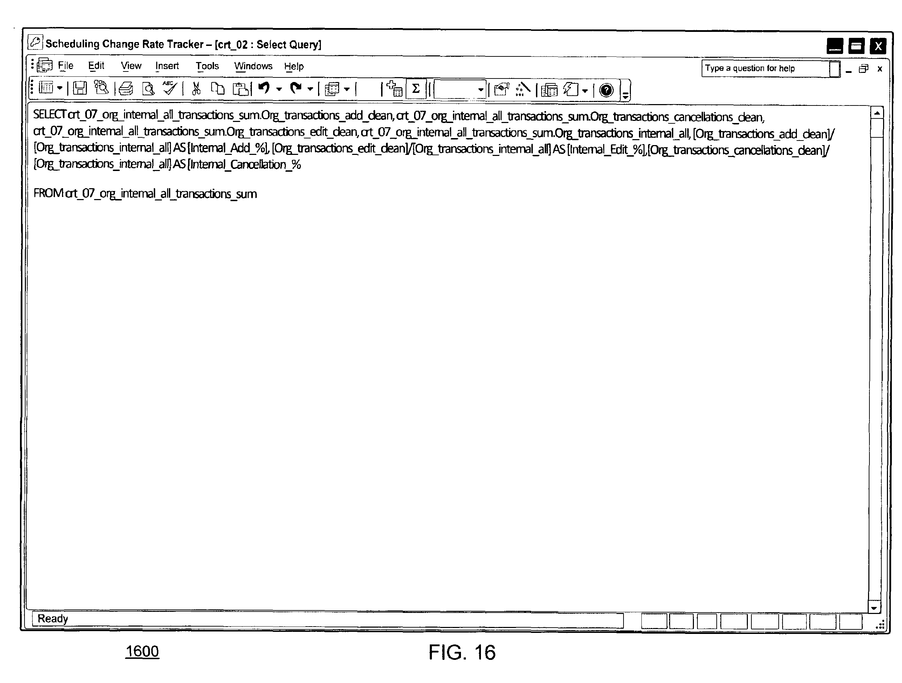

Figure 16 shows screenshot 1600 in which SQL queries further analyze aggregated data against predicted demand in accordance with an embodiment of the invention.

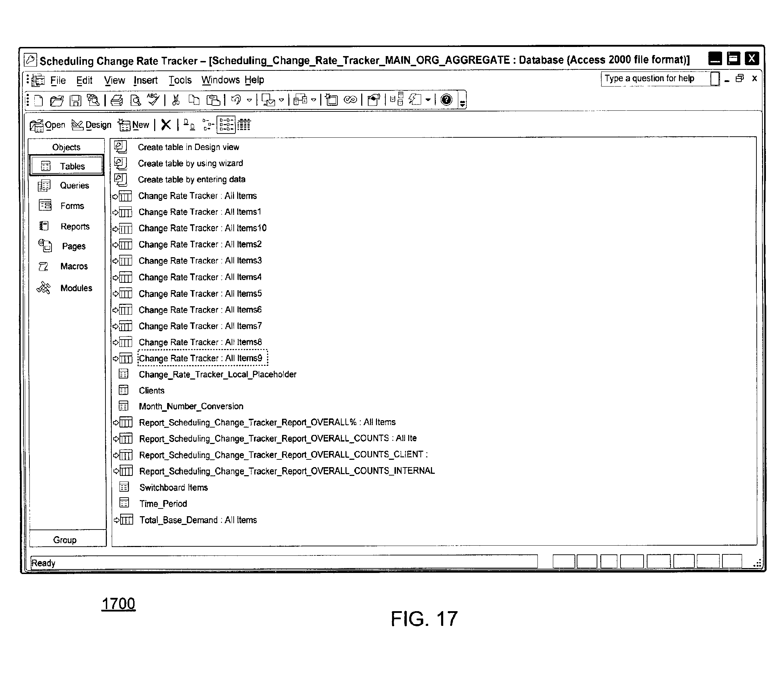

Figure 17 shows screenshot 1700 in which results of business rule analysis are appended to linked reporting tables in accordance with an embodiment of the invention.

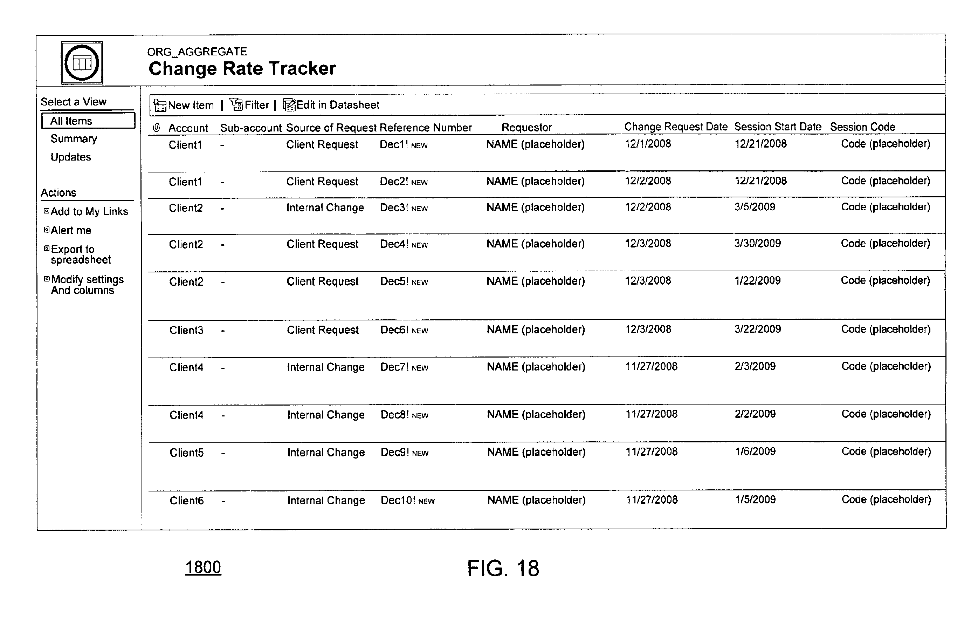

Figure 18 shows screenshot 1800 in which aggregated results from all linked SharePoint sites/clients are published and mirrored to a specified SharePoint site in accordance with an embodiment of the invention.

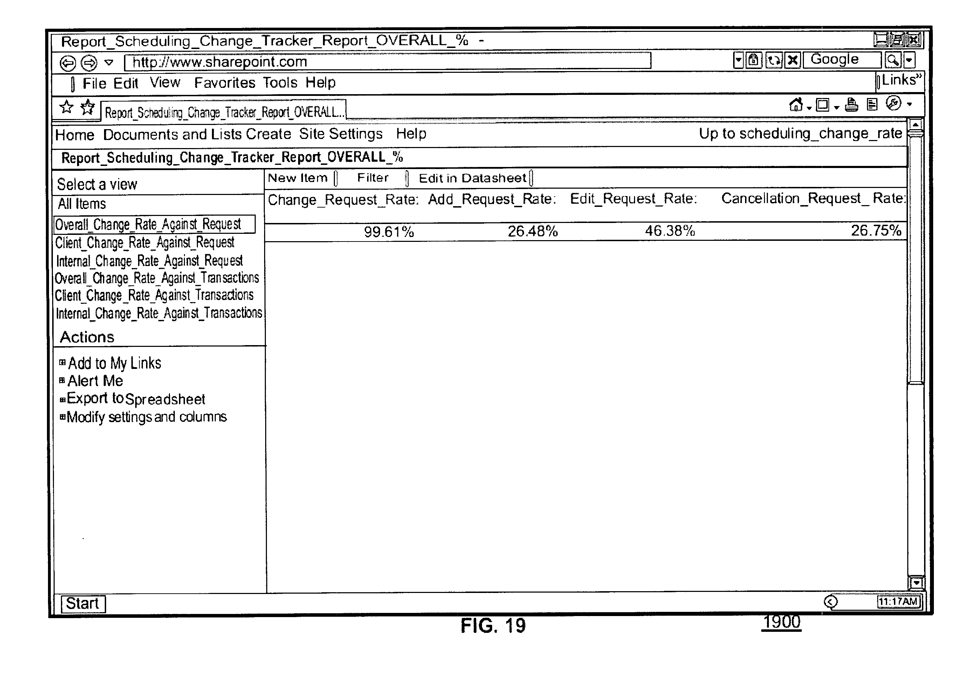

Figure 19 shows screenshot 1900 in which results of query analysis, which may be driven by business rules, are published and available within data aggregation SharePoint site in accordance with an embodiment of the invention.

Figure 20 shows screenshot 2000 for requesting a customer report in accordance with an embodiment of the invention.

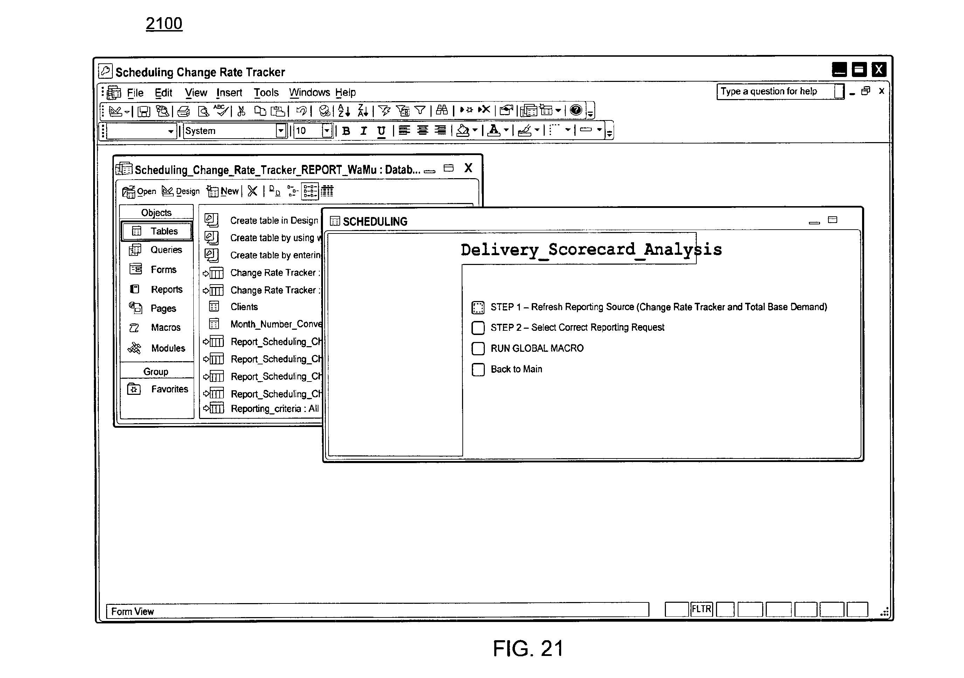

Figure 21 shows screenshot 2100 in which an administrator is guided through the reporting process in accordance with an embodiment of the invention.

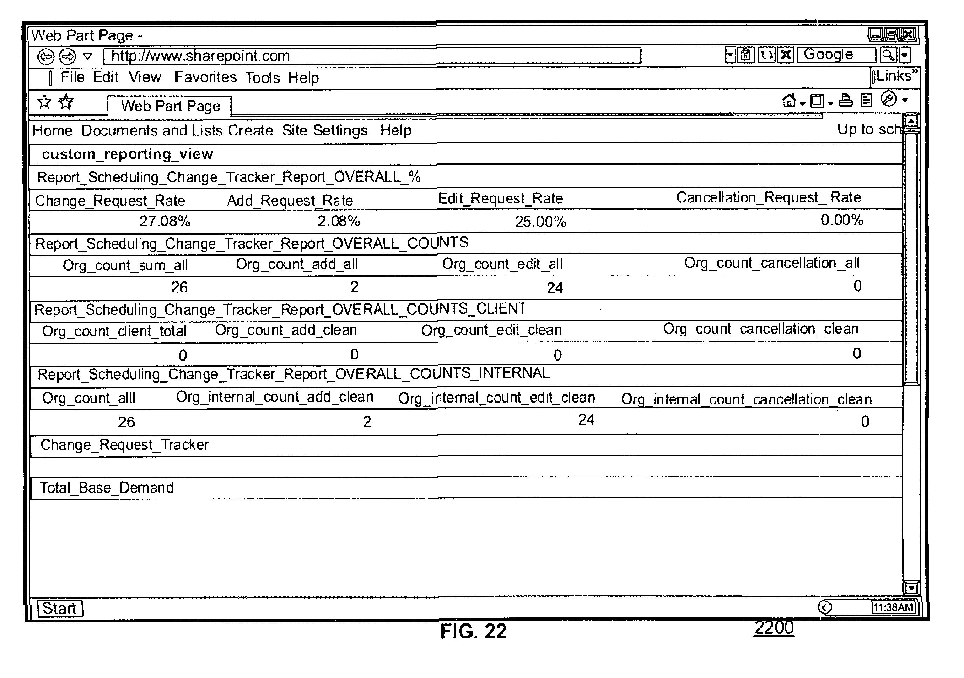

Figure 22 shows screenshot 2200 in which data views of a custom report is presented in accordance with an embodiment of the invention.

As can be appreciated by one skilled in the art, a computer system with an associated computer-readable medium containing instructions for controlling the computer system may be utilized to implement the exemplary embodiments that are disclosed herein. The computer system may include at least one computer such as a microprocessor, a cluster of microprocessors, a mainframe, and networked workstations.

While the invention has been described with respect to specific examples including presently preferred modes of carrying out the invention, those skilled in the art will appreciate that there are numerous variations and permutations of the above described systems and techniques that fall within the spirit and scope of the invention as set forth in the appended claims.

## Claims

1. A computer-assisted method comprising:
(a) mirroring, at a local data site, a first data set from a first data site;
(b) mirroring, at the local data site, a second data set from a second data site;
(c) aggregating the first data set and the second data set into an aggregated mirrored data set; and
(d) analyzing a selected portion of the aggregated data set based on a set of business rules to obtain analysis results.

2. The method of claim 1, further comprising:
publish the analysis results to a selected data site.

3. The method of claim 2, wherein the selected data site comprises the first data site, or:
wherein the selected data site is different from the first and second data sites.

4. The method of any preceding claim, wherein (d) comprises analyzing the selected portion using a function that is not available on the first and second data sites, or:
wherein (d) comprises analyzing the aggregated data set against an independent data set.

5. The method of any preceding claim, wherein (a) comprises linking a first table with the first data set.

6. The method of any preceding claim, further comprising:
receiving a set of custom reporting criteria from the first data site; and
analyzing the aggregated mirrored data set based on the set of custom reporting criteria to obtain custom results;
and optionally:
further comprising publishing the custom results to the first data site.

7. The method of any preceding claim, wherein the first data site supports Microsoft SharePoint® and the local data site supports Microsoft Access®.

8. A computer-readable storage medium storing computer-executable instructions that, when executed, cause a processor to perform a method comprising:
(a) mirroring, at a local data site, a first data set from a first data site;
(b) mirroring, at the local data site, a second data set from a second data site;
(c) aggregating the first data set and the second data set into an aggregated mirrored data set; and
(d) analyzing a selected portion of the aggregated data set based on a set of business rules to obtain analysis results.

9. The computer-readable medium of claim 8 or 9, said method further comprising:
publish the analysis results to a selected data site.

10. The computer-readable medium of claims 8 or 9, wherein (d) comprises analyzing the selected portion using a function that is not available on the first and second data sites.

11. The computer-readable medium of any of claims 8 to 10, said method further comprising:
receiving a set of custom reporting criteria from the first data site; and
analyzing the aggregated mirrored data set based on the set of custom reporting criteria to obtain custom results;
and optionally:
said method further comprising publishing the custom results to the first data site.

12. An apparatus comprising:
a processor; and
a memory having stored therein machine executable instructions, that when executed cause the apparatus to: processor configured to retrieve instructions from the memory and to perform:
mirror, at a local data site, a first data set from a first data site;
mirror, at the local data site, a second data set from a second data site;
aggregate the first data set and the second data set into an aggregated mirrored data set; and
analyze a selected portion of the aggregated data set based on a set of business rules to obtain analysis results.

13. The apparatus of claim 12, wherein the instructions further cause the apparatus to:
publish the analysis results to a selected data site.

14. The apparatus of claim 12 or 13, wherein the instructions further cause the apparatus to:
analyze the selected portion using a function that is not available on the first and second data sites.

15. The apparatus of any preceding claims 12 to 14, wherein the instructions further cause the apparatus to:
receive a set of custom reporting criteria from the first data site; and
analyze the aggregated mirrored data set based on the set of custom reporting criteria to obtain custom results;
and optionally:
wherein the instructions further cause the apparatus to: publish the custom results to the first data site.
